# EUROPEAN PATENT APPLICATION

(11) **EP 1 643 266 A1**
(43) Date of publication of application: **05.04.2006**
(21) Application number: 05020899.0
(22) Date of filing: 23.09.2005
(51) Int. Cl.: G01S 13/10, G01S 7/34

(54) **Pulse wave radar device**

(30) Priority: 29.09.2004 JP 2004283182
(71) Applicant: TDK Corporation, Tokyo 103-8272 (JP)
(72) Inventor: Yokoyama, Takeshi, Tokyo 103-8272 (JP); Kurata, Hitoyoshi, Tokyo 103-8272 (JP); Honya, Tomohiro, Tokyo 103-8272 (JP); Yamashita, Yoshinari, Tokyo 103-8272 (JP)
(74) Representative: Degwert, Hartmut

(57) **Abstract**

To achieve a purpose of accurately detecting a distance to a target even in a close range, a pulse wave radar device according to the present invention cuts off an output of a demodulation circuit so that no of receiving pulse may be detected, during a period when a transmitting pulse wave output from a transmitting antenna or a transmitting pulse output from a pulse generation circuit is leaking to a receiving antenna or a receiving circuit.

## Description

### BACKGROUND OF THE INVENTION

### Field of the Invention

The present invention relates to a pulse wave radar device that uses a millimetric wave or a submillimetric wave. More specifically, it relates to a pulse wave radar device that has an improved ability of detecting a reflected wave from a target in a close range.

### Description of the related art

A pulse wave radar device is used which sends a pulse-modulated transmitting pulse wave and receives a receiving pulse wave reflected from the target, to calculate a distance to this target. Since a round-trip distance to a target can be obtained by integrating the light velocity with a lapse of time from a moment of sending transmitting pulse waves to a moment of receiving reflected waves from the target, the pulse wave radar device measures a lapse of time from a moment of sending a transmitting pulse to a moment of receiving a reflected wave from a target , to calculate a distance to the target.

Recently, a radar device has been installed in a vehicle for the purpose of collision prevention or automatic cruising. Such a pulse wave radar device sends a transmitting pulse wave and then gets ready for receiving a receiving pulse wave reflected from a target in a close range. A vehicle-installed pulse wave radar device detects a target in a wide range from several tens of centimeters to several tens of meters and so needs to have a distance resolution of several tens of centimeters. Therefore, a narrow pulse having a pulse width of about 1ns is used in it.

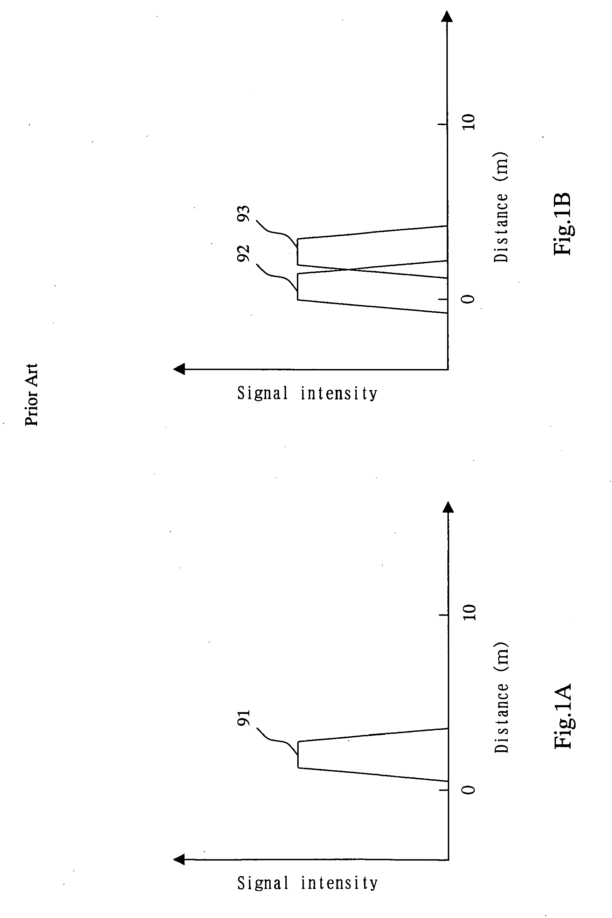

However, the pulse wave radar device is disturbed in detection of a target if transmitting pulses leak from a pulse generation circuit to a receiving circuit or transmitting pulse waves leak from a modulation circuit or a transmitting antenna to a demodulation circuit or a receiving antenna. FIG. 1 shows an example of a disorder due to leakage. In FIG. 1, a horizontal axis represents a distance to the target and a vertical axis represents a signal intensity of the pulse. Reference numbers 91 and 92 denotes leakage pulses that occurred due to leakage in the pulse wave radar device and a number 93 denotes a receiving pulse from the target in a close range.

If the pulse wave radar device encounters leakage as shown in FIG. 1A, it detects the leakage pulse 91 due to the leakage as a receiving pulse from the target and so mistakenly decides presence of the target. If the pulse wave radar device encounters leakage as shown in FIG. 1B, on the other hand, such a trouble may occur that it cannot detect the receiving pulse from the target in a close range when it is detecting the leakage pulse 92 due to the leakage. In this case, it cannot detect the target despite the existence of the target.

To reduce such leakage, a technology is disclosed to provide a wave absorber in a radome so that wraparound from a transmitting antenna 23 to a receiving antenna 31 may be prevented (see Japanese Patent Application Laid-Open No.287568, for example) . Another technology is disclosed to provide a switch to a preceding stage of a pre-amplification circuit 32 so that a transmitting pulse may be prevented from turning around to the receiving circuit (see Japanese Utility Model Application No. 5-11080, for example).

### SUMMARY OF THE INVENTION

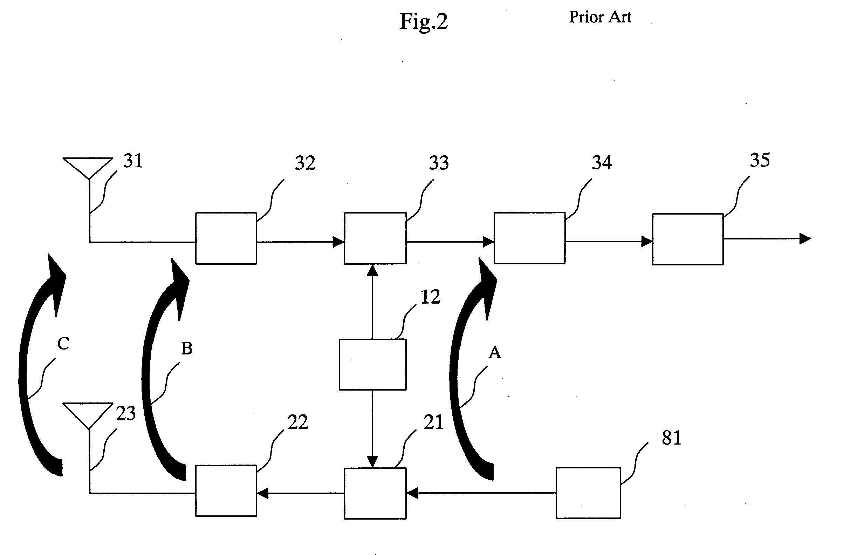

A conventional pulse wave radar device and a main leakage path in it are shown in FIG. 2. In FIG. 2, a number 81 is a pulse generation circuit for generating a transmitting pulse, a reference number 12 denotes an oscillator that oscillates at an oscillation frequency. A number 21 is a modulation circuit for modulating a transmitting pulse at the oscillation frequency and outputting a transmitting pulse wave, a number 22 is a power amplification circuit for amplifying the transmitting pulse wave, a number 23 is a transmitting antenna for transmitting the transmitting pulse wave, a number 31 is a receiving antenna for receiving a receiving pulse wave from a target, a number 32 is a pre-amplification circuit for amplifying a weak of receiving pulse wave, a number 33 is a demodulation circuit for demodulating a receiving pulse wave and outputting the receiving pulse, a number 34 is a baseband amplification circuit for amplifying the demodulated of receiving pulse, a number 35 is a signal processing circuit for identifying the receiving pulse to calculate a round-trip propagation time to the target, and A, B, and C denote leakage pieces that occur respectively in the pulse wave radar device.

As for the main leakage paths, leakage C occurs as turning around from the transmitting antenna 23 to the receiving antenna 31, leakage B occurs due to a transmitting pulse wave modulated in the pulse wave radar device, and leakage A occurs due to a transmitting pulse in the pulse wave radar device. If a leakage pulse wave due to the leakage is large, a receiving pulse wave cannot be received until it is saturated in a receiving circuit and comes back to a normal state. To avoid such saturation, it is desirable to take countermeasures against leakage at the preceding stage of a reception system as much as possible.

Conventionally, leakage C of FIG. 2 can be reduced by a technology to provide a wave absorber in a radome so that wraparound from the transmitting antenna 23 to the receiving antenna 31 may be prevented. However, it has no effects of reducing leakage B or leakage A. By a technology to provide a switch to a preceding stage of the pre-amplification circuit 32 so that a transmitting pulse wave may be prevented from turning around to the receiving circuit, on the other hand, leak C and leak B of FIG. 2 can be reduced. However, it has no effects of reducing leakage A.

As described above, the recent pulse wave radar device detects a target in a wide range from several tens of centimeters to several tens of meters, so that a thin pulse having a pulse width of about 1ns is being used. Therefore, leakage (leakage A of FIG. 2) of a transmitting pulse occurs recently which used to be of no problem is the conventional pulse wave radar device.

In view of this problem, it is an object of the present invention to provide a pulse wave radar device that can reduce effects not only of transmitting pulse wave leakage but also of leakage of a transmitting pulse that occurs in a pulse wave radar device, to prevent error detection due to the leakage, thereby accurately detecting a distance to a target in a close range.

To this end, a pulse wave radar device according to the present invention cuts off an output of a demodulation circuit so that no leakage pulse may be detected, during a time when a transmitting pulse wave to be transmitted from a transmitting antenna or a transmitting pulse generated by a pulse generation circuit is leaking to a receiving antenna or a receiving circuit.

Specifically, the present invention provides a pulse wave radar device that includes a transmitting circuit for periodically sending a transmitting pulse wave obtained by modulating a transmitting pulse, a transmitting antenna for transmitting a transmitting pulse wave from the transmitting circuit, a receiving antenna for receiving a receiving pulse wave reflected from a target, a demodulation circuit for demodulating a receiving pulse wave from the receiving antenna, and a cutoff circuit for temporarily shifting an output of the demodulation circuit from a conductive state to a cutoff state, in which the cutoff circuit cuts off the output of the demodulation circuit during a time when the transmitting pulse or the transmitting pulse wave is leaking in the pulse wave radar device.

By the present invention, it is possible to prevent error detection due to leakage by reducing effects not only of transmitting pulse wave leakage but also of transmitting pulse leakage that occurs in the pulse wave radar device, thereby accurately detecting a distance to a target in a close range.

The present invention provides another pulse wave radar device that includes a transmitting circuit for periodically sending a transmitting pulse wave obtained by modulating a transmitting pulse, a transmitting antenna for transmitting a transmitting pulse wave from the transmitting circuit, a receiving antenna for receiving a receiving pulse wave reflected from a target, a demodulation circuit for demodulating a receiving pulse wave from the receiving antenna, and a cutoff circuit for temporarily shifting an output of the demodulation circuit from a conductive state to a cutoff state, in which the cutoff circuit cuts off the output of the demodulation circuit until a moment timing that corresponds to a minimum detectable distance.

According to the present invention, by cutting off an output of the demodulation circuit until a moment timing which corresponds to a minimum detectable distance, it is possible to prevent error detection due to leakage by reducing effects not only of transmitting pulse wave leakage but also of transmitting pulse leakage which occurs in the pulse wave radar device.

In the pulse wave radar device of the present invention, preferably the cutoff circuit cuts off the output of the demodulation circuit starting from a moment timing that corresponds to a maximum detectable distance.

According to the present invention, by cutting off the output of the demodulation circuit starting from the moment timing that corresponds to the maximum detectable distance, it is possible to prevent error detection due to leakage by reducing effects not only of transmitting pulse wave leakage but also of transmitting pulse leakage which occurs in the pulse wave radar device.

Further, in the pulse wave radar device of the present invention, preferably the cutoff circuit shifts from a conductive state to a cutoff state and/or vice versa through a time-wise gradient.

By the present invention, occurrence of a noise owing to a cutoff operation can be reduced while cutting off leakage pulses, so that it is possible to prevent error detection due to leakage, thereby accurately detecting a distance to a target in a close range also.

Further, in the pulse wave radar device of the present invention, preferably the cutoff circuit is controlled to shift from a conductive state to a cutoff state and/or vice versa by a pulse wave-shape that changes through a time-wise gradient of a leading edge and/or a trailing edge.

By the present invention, occurrence of a noise owing to a cutoff operation can be reduced while cutting off leakage pulses, so that it is possible to prevent error detection due to leakage, thereby accurately detecting a distance to a target in a close range also.

Further, the pulse wave radar device of the present invention may further include a round-trip propagation time calculation circuit for calculating a round-trip propagation time to a target based on a difference in time between a timing when a transmitting pulse wave is transmitted from the transmitting antenna and a timing when a receiving pulse wave is received by the receiving antenna.

By the present invention, the round-trip propagation time to the target can be calculated easily.

The time-wise gradient in the present invention means a time-wise slope over which a rectangular wave passed through a primary or secondary low-pass filter rises or falls gradually.

By the present invention, it is possible to provide a pulse wave radar device that can prevent error detection due to leakage by reducing effects not only of transmitting pulse wave leakage but also of transmitting pulse leakage that occurs in the pulse wave radar device, thereby accurately detecting a distance to a target in a close range.

### BRIEF DESCRIPTION OF THE DRAWINGS

FIG. 1 is a timing chart of an example of a trouble due to leakage that occurs in a conventional pulse wave radar device;
FIG. 2 is a block diagram of the conventional pulse wave radar device and main leakage paths;
FIG. 3 is a block diagram of an example of an embodiment of a pulse wave radar device according to the present invention and leakage paths;
FIG. 4 is a block diagram of an example of another embodiment of the pulse wave radar device according to the present invention and leakage paths;
FIG. 5 shows a timing of a cutoff operation by a cutoff circuit in the pulse wave radar device;
FIG. 6 shows a configuration example of the cutoff circuit in the pulse wave radar device according to the present invention;
FIGS. 7A to 7D show waveforms at terminals of the cutoff circuit in the pulse wave radar device according to the present invention;
FIG. 8 shows another configuration example of the cutoff circuit in the pulse wave radar device according to the present invention;
FIGS. 9A to 9D show waveforms at terminals of the cutoff circuit in the pulse wave radar device according to the present invention;
FIG. 10 shows an example of a waveform input to a control terminal of the cutoff circuit in the pulse wave radar device according to the present invention; and
FIG. 11 shows a configuration example of a round-trip propagation calculation circuit.

### DESCRIPTION OF THE PREFERRED EMBODIMENTS

The following will describe embodiments of the present invention with reference to drawings. However, the present invention is not limited to the following embodiments.

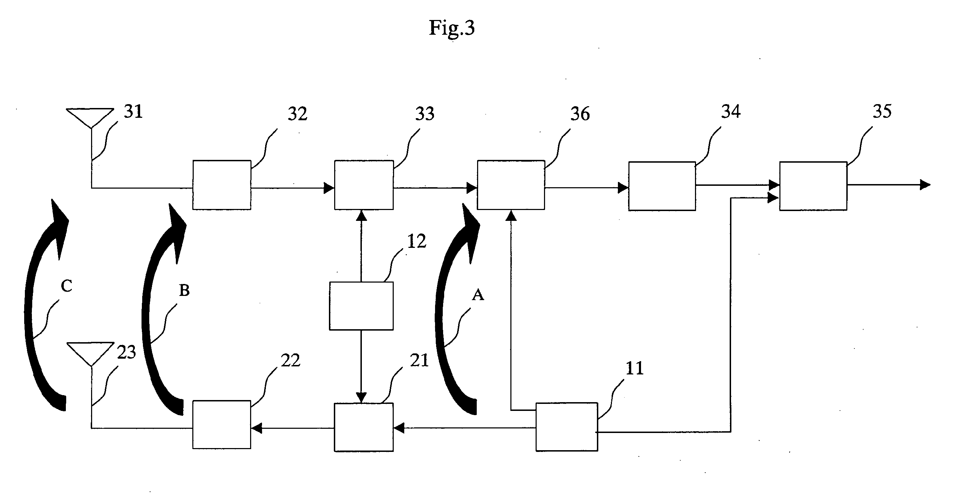

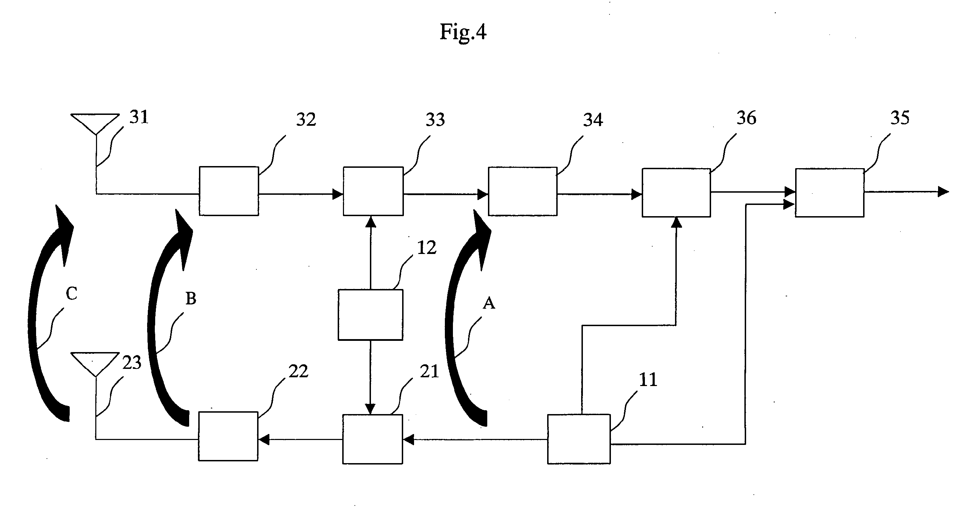

FIG. 3 is a block diagram showing one example of an embodiment of a pulse wave radar device according to the present invention and leakage paths and FIG. 4 is a block diagram showing one example of another embodiment of the pulse wave radar device according to the present invention and leakage paths. In FIGS . 3 and 4 , a number 11 denotes a pulse generation circuit for generating a transmitting pulse having a predetermined period. A number 12 is an oscillator that oscillates at a modulation frequency, a number 21 is a modulation circuit for modulating a transmitting pulse at a modulation frequency, a number 22 is a power amplification circuit for amplifying power of a transmitting pulse wave, a number 23 is a transmitting antenna for transmitting a transmitting pulse wave, a number 31 is a receiving antenna for receiving a receiving pulse wave, a number 32 is a pre-amplification circuit for amplifying a receiving pulse wave, a number 33 is a demodulation circuit for demodulating a receiving pulse wave, a number 34 is a baseband amplification circuit for amplifying a demodulated receiving pulse, a number 35 is a signal processing circuit for processing as a signal a demodulated receiving pulse, a number 36 is a cutoff circuit for temporarily shifting a signal path from a conductive state to a cutoff state, and A, B, and C indicate leakage pieces in the pulse wave radar device.

A transmitting circuit includes the pulse generation circuit 11, the oscillator 12, the modulation circuit 21, and the power amplification circuit 22. A receiving circuit includes the oscillator 12, the pre-amplification circuit 32, the demodulation circuit 33, the baseband amplification circuit 34, the signal processing circuit 35, and the cutoff circuit 36.

First, a configuration of a transmission system of the pulse wave radar device is described with reference to FIG. 3. The pulse generation circuit 11 generates a transmitting pulse having a predetermined period. It is preferable to set the predetermined period longer than a round-trip propagation time of radiowaves that corresponds to a maximum detectable distance of the present pulse wave radar device. The modulation circuit 21 modulates a transmitting pulse from the pulse generation circuit 11 by using a modulation wave from the oscillator 12 and outputs a transmitting pulse wave. The power amplification circuit 22 amplifies power of a transmitting pulse wave from the modulation circuit 21, and the transmitting antenna 23 serves to transmit a transmitting pulse wave from the power amplification circuit 22. The transmitting antenna 23 may be composed of a plurality of antennas.

Next, a configuration of a reception system of the pulse wave radar device is described with reference to FIG. 3. The receiving antenna 31 receives a receiving pulse wave reflected from a target. The receiving antenna 31 may be composed of a plurality of antennas. It may further be a transmission/receiving antenna. The pre-amplification circuit 32 amplifies a weak receiving pulse wave. The demodulation circuit 33 detects the receiving pulse wave by using an oscillated wave having a frequency used by the pulse wave radar device, to thereby demodulate a receiving pulse. The baseband amplification circuit 34 amplifies the demodulated of receiving pulse from the demodulation circuit 33 to a signal level suited to detect the pulse. The signal processing circuit 35 finds the target by detecting the demodulated of receiving pulse.

Further, the signal processing circuit 35 may calculate a round-trip propagation time to the target based on a difference in time between a timing when a transmitting pulse from the transmitting circuit and a timing when a receiving pulse from the receiving circuit is detected. In FIG. 3, this difference in time corresponds to that between a timing when the pulse generation circuit 11 outputs a transmitting pulse and a timing when the signal processing circuit 35 detects a receiving pulse. It is preferable to measure a delay time through the transmitting circuit, the transmitting antenna, the receiving antenna, and the receiving circuit beforehand so that the signal processing circuit 35 may subtract this delay time measured beforehand, to compensate round-trip propagation time to the target, which is a lapse of time that elapses from a moment when a transmitting pulse wave is transmitted from the transmitting antenna to a moment when the receiving antenna receives a receiving pulse wave.

Furthermore, the signal processing circuit 35 may calculate a round-trip distance to the target by integrating the light velocity with the round-trip propagation time.

In the pulse wave radar device shown in FIG. 3, the cutoff circuit 36 cuts off an output of the demodulation circuit 33 during a time when a transmitting pulse or a transmitting pulse wave is leaking in the pulse wave radar device. That is, when a transmitting pulse is output from the pulse generation circuit 11, the transmitting pulse may leak from the pulse generation circuit 11 or an input path from it to the modulation circuit 21 to the demodulation circuit 33 or its output path (leakage A of FIG. 3) . Further, when a transmitting pulse wave is output from the modulation circuit 21, the transmitting pulse wave may leak from the modulation circuit 21, the power amplification circuit 22, or either one of their output paths to the pre-amplification circuit 32, the demodulation circuit 33, or either one of their input paths (leakage B of FIG. 3). Further, leakage may occur from the transmitting antenna 23 to the receiving antenna 31 (leakage C of FIG. 3). During a time when a transmitting pulse is being input to the baseband amplification circuit 34 through a path of leakage A or when a transmitting pulse wave is demodulated by the demodulation circuit 33 and being input to the baseband amplification circuit 34 like a receiving pulse wave through a path of leakage B or C, an output from the demodulation circuit 33 to the baseband amplification circuit 34 is cut off by the cutoff circuit 36. That is, the output of the demodulation circuit 33 is cut off.

The cutoff circuit 36 is controlled at a timing when a transmitting pulse is output from the pulse generation circuit 11. That is, by measuring beforehand a timing at which a transmitting pulse or a transmitting pulse wave leaks, it is possible to set a period during which the output of the demodulation circuit 33 is to be cut off by the cutoff circuit 36 under the control from the pulse generation circuit 11.

As described above, by arranging the cutoff circuit 36 to a stage following the demodulation circuit 33, it is possible to prevent error detection due to leakage by reducing effects not only of leakage pieces B and C but also of leakage A of FIG. 3, thereby accurately detecting a distance to a target in a close range.

The following will describe another embodiment of the pulse wave radar device with reference to FIG. 4. In FIG. 4, the same symbols as those in FIG. 3 indicate the same components. The pulse wave radar device shown in FIG. 4 is different from that shown in FIG. 3 in a respect that a cutoff circuit 36 is arranged to a following stage of the baseband amplification circuit 34. The cutoff circuit 36 is adapted to cut off an output of a demodulation circuit 33 via the baseband amplification circuit 34.

By such arrangement, a noise generated by the cutoff circuit 36 is not amplified by the baseband amplification circuit 34 so that a receiving pulse may be detected, thus having less influence on the detection of the receiving pulse. Further, even in a case where a pulse due to leakage is so large that a saturation level of the baseband amplification circuit 34 may be reached, this pulse due to leakage has a constant size, so that if a normal operation is recovered from the saturation state quickly, it is possible to reduce effects to the leakage by the cutoff circuit 36 easily.

In the pulse wave radar device shown in FIG. 4, the cutoff circuit 36 cuts off an output of the baseband amplification circuit 34 during a time when a transmitting pulse or a transmitting pulse wave is leaking in the pulse wave radar device. That is, when a transmitting pulse output from the pulse generation circuit 11, the transmitting pulse may leak from the pulse generation circuit 11 or an input path from it to the modulation circuit 21 to the demodulation circuit 33 or an output path of the demodulation circuit 33 or the baseband amplification circuit 34 (leakage A of FIG. 4) . Further, when a transmitting pulse wave is output from the modulation circuit 21, the transmitting pulse wave may leak from the modulation circuit 21, the power amplification circuit 22, or either one of their output paths to the pre-amplification circuit 32, the demodulation circuit 33, or either one of their input paths (leakage B of FIG. 4). Further, leakage may occur from the transmitting antenna 23 to the receiving antenna 31 (leakage C of FIG. 4). During a time when a transmitting pulse is being output from the baseband amplification circuit 34 through a path of leakage A or when a transmitting pulse wave is demodulated by the demodulation circuit 33 and being output from the baseband amplification circuit 34 like a receiving pulse wave through a path of leakage B or C, an output of the demodulation circuit 33 is cut off by the cutoff circuit 36. That is, the output of the demodulation circuit 33 is cut off via the baseband amplification circuit 34.

The cutoff circuit 36 is controlled at a timing when a transmitting pulse is output from the pulse generation circuit 11. That is, by measuring beforehand a timing at which a transmitting pulse or a transmitting pulse wave leaks, it is possible to set a period during which the output of the baseband amplification circuit 34 is to be cut off by the cutoff circuit 36 under the control from the pulse generation circuit 11.

As described above, by arranging the cutoff circuit 36 to a stage following the baseband amplification circuit 34, it is possible to prevent error detection due to leakage by reducing effects not only of leakage pieces B and C but also of leakage A of FIG. 4, thereby accurately detecting a distance to a target in a close range.

The pulse wave radar device shown in FIG. 3 and that shown in FIG. 4 are the same in reducing leakage pieces A, B, and C. In a case where a leakage pulse is large, so that a receiving pulse is received before a normal operation is recovered after the baseband amplification circuit 34 is saturated, the pulse wave radar device shown in FIG. 3 is desirable. In a case where the baseband amplification circuit 34 is not saturated by a leakage pulse or a receiving pulse is not received before a normal operation is recovered even if it is saturated, an input amplitude of the pulse due to leakage to the signal processing circuit 35 is constant even if it is saturated, so that the pulse radar shown in FIG. 4 may be used. Further, if a transmitting pulse leaks to the output path of the baseband amplification circuit 34, the pulse wave radar device shown in FIG. 4 is desirable.

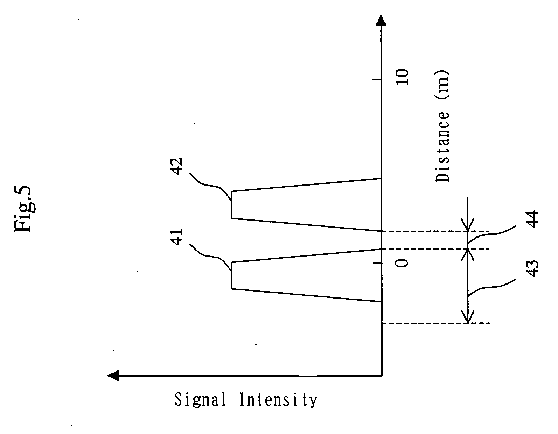

A timing at which the cutoff circuit in the pulse wave radar device shown in FIG. 3 or 4 performs a cutoff operation is shown in FIG. 5. This is described using the symbols explained with FIGS. 3 and 4, as needed. In FIG. 5, a horizontal axis represents a distance to a target and a vertical axis, a signal intensity of a pulse. A reference number 41 denotes a leakage pulse that occurred due to leakage in the pulse wave radar device and a number 42 is a receiving pulse from a target in a close range. A number 43 is a period during which the cutoff circuit 36 performs cutoff operations and a number 44 is a transition duration over which the cutoff circuit 36 shifts from a cutoff state to a conductive state.

If the receiving pulse 42 is reflected from the target in a close range, to detect the receiving pulse 42, the cutoff circuit 36 needs to be back in a conductive state. A timing at which the leakage pulse 41 occurs can be acquired from the pulse generation circuit 11 . Based on timing information from the pulse generation circuit 11, the circuit shifts from a conductive state to a cutoff state to provide the cutoff period 43. In the cutoff period 43, the circuit cuts off the pulse 41 that occurs owing to leakage and then passes through the transition period 44 from the cutoff state to the conductive state, to come back to the conductive state.

By such an operation, it is possible to properly detect the receiving pulse 42 from the target in a condition where the leakage pulse 41 is cut off, thereby preventing error detection due to leakage so that a distance to a target in a close range may be detected accurately.

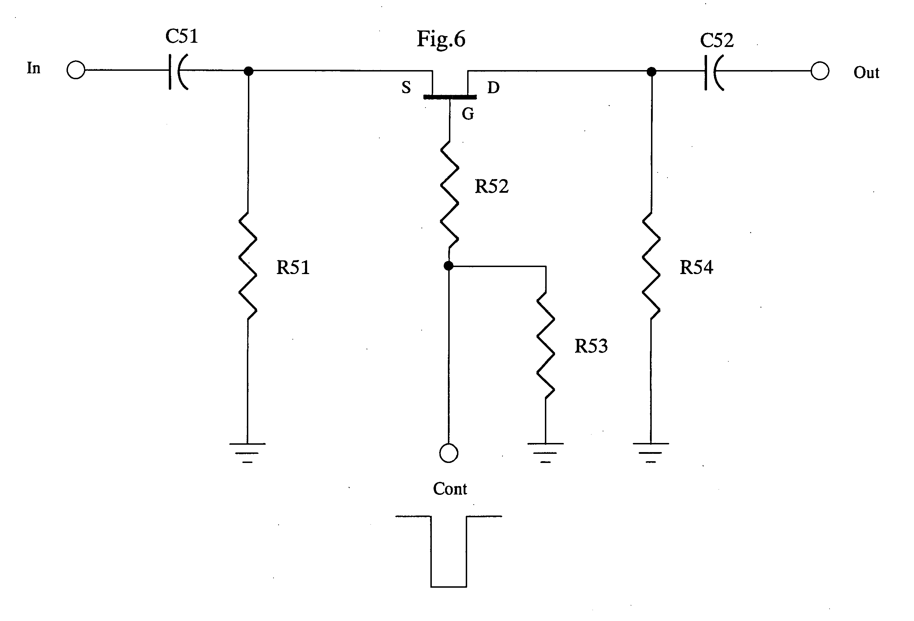

A configuration example of the cutoff circuit 36 shown in FIG. 3 or 4 is shown in FIG. 6. R51 to R54 indicate resistor and C51-C52. indicate capacitor. Before a leakage pulse from the demodulation circuit 33 or the baseband amplification circuit 34 is applied to an input terminal (In) of the cutoff circuit 36, a control signal, which is timing information from the pulse generation circuit 11, is input to a control terminal (Cont), so that the cutoff circuit controls a gate terminal (G) of an FET to cut off the FET. In a cutoff state, an electrical signal from a source terminal (S) to a drain terminal (D) of the FET is cut off, so that the leakage pulse is not transferred.

If a receiving pulse from a target at a minimum detectable distance reaches the input terminal (In), the FET comes back to the conductive state, so that the receiving pulse is transferred from the source terminal (S) to the drain terminal (D) of the FET and output from an output terminal (Out) to the baseband amplification circuit 34 or the signal processing circuit 35.

Although the present embodiment has used a GaAs-HEMT to constitute a main component of the cutoff circuit 36, the cutoff circuit can be constituted similarly using an MOS-FET or a silicon-made bipolar transistor.

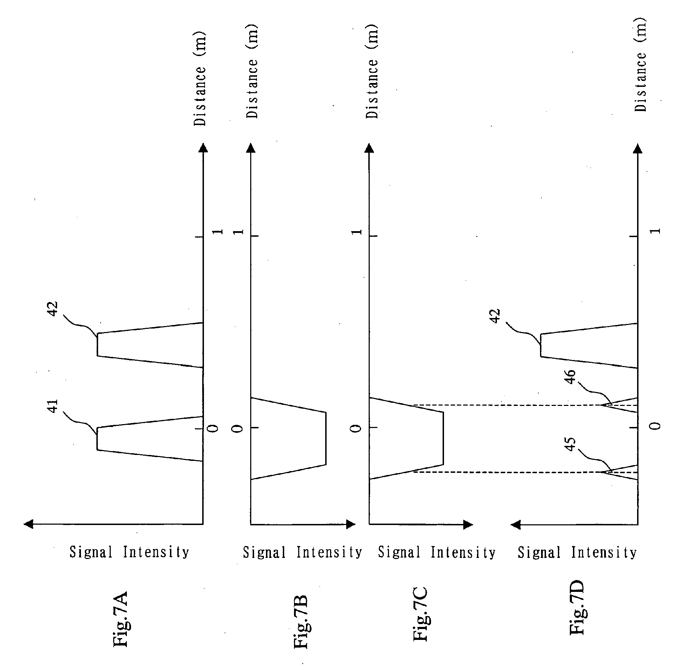

Waveforms at the terminals of the cutoff circuit 36 shown in FIG. 6 are shown in FIGS. 7A to 7D. FIG. 7A shows an input waveform at the input terminal (In), FIG. 7B shows a control signal at the control terminal (Cont), FIG. 7C shows transfer characteristics of the FET, and FIG. 7D shows an output waveform at the output terminal (Out) in FIG. 6. The number 41 denotes a leakage pulse that occurred owing to leakage in the pulse wave radar device, the number 42 is a receiving pulse from a target in a close range, and numbers 45 and 46 indicate a noise that occurs due to a cutoff operation of the cutoff circuit.

The leakage pulse 41 and the receiving pulse 42 shown in FIG.7A are input to the input terminal (In) of the cutoff circuit 36. The control terminal (Cont) is supplied with a control signal shown in FIG. 7B, in order to cut off the leakage pulse 41. The FET cuts off the leakage pulse 41 in accordance with the transfer characteristics shown in FIG. 7C. However, since a short-distance pulse wave radar device has a small cutoff period, not only the receiving pulse 42 but also the noises 45 and 46 that occur due to the cutoff operation appear at the output terminal (Out) of the cutoff circuit 36 as shown in FIG. 7D.

If such noises 45 and 46 are input to the signal processing circuit 35, they are mistakenly detected as a receiving pulse. Further, a steep transition from a conductive state to a cutoff state or vice versa is liable to cause a malfunction if a timing error has occurred. That is, if the control signal occurs too early, a leakage pulse remains as it is, and if the control signal occurs too late, a normal of receiving pulse is cut off.

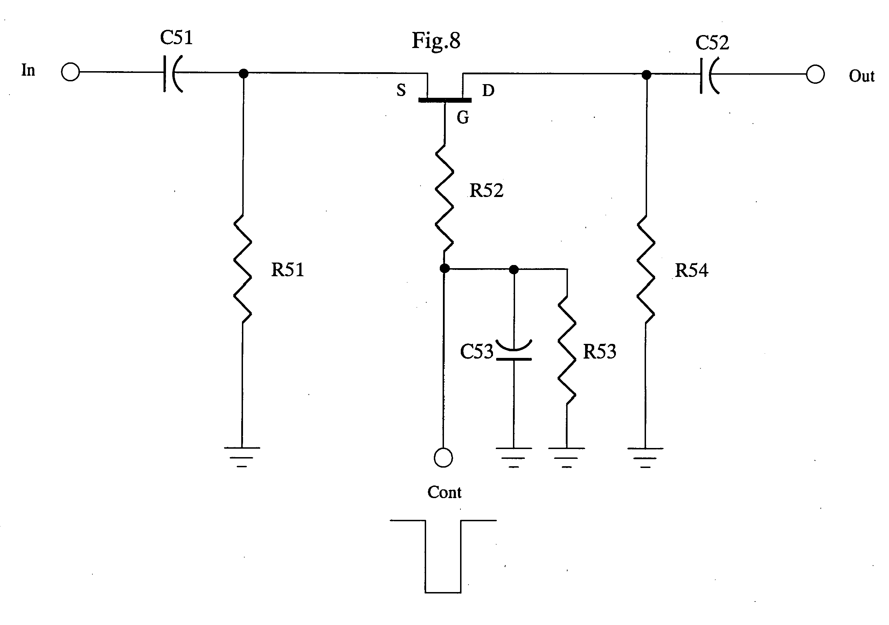

To solve this problem, preferably the cutoff circuit has a configuration shown in FIG. 8. In FIG. 8, the same symbols as those in FIG. 7 indicate the same components. The cutoff circuit of FIG. 8 is different from that shown in FIG. 7A to 7D in a respect that a capacitor C53 is added to the control terminal (Cont). By providing the capacitor C53 in parallel with the input resistor R53 of the control terminal (Cont), the cutoff circuit can integrate the control signal so that an integrated signal may be used to perform cutoff operations.

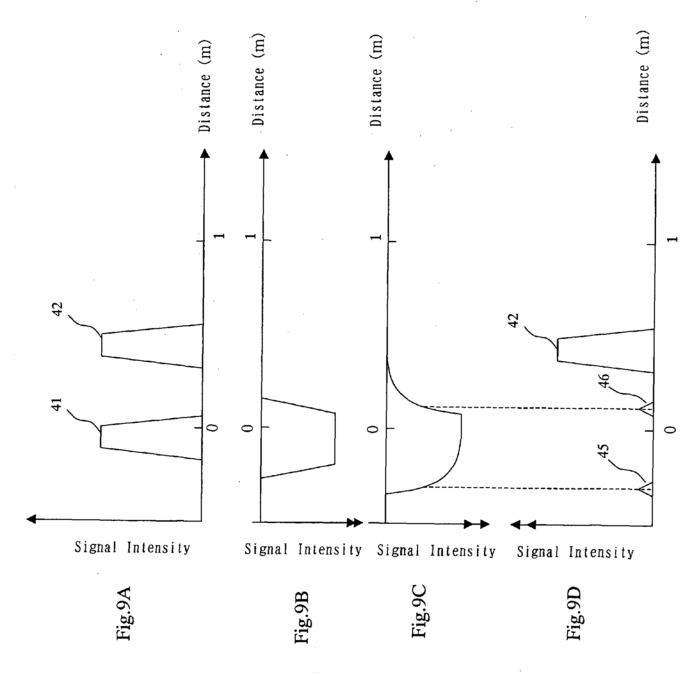

Waveforms at the terminals of the cutoff circuit 36 shown in FIG. 8 are shown in FIG. 9A to 9D. FIG. 9A shows an input waveform at the input terminal (In), FIG. 9B shows a control signal at the control terminal (Cont), FIG. 9C shows transfer characteristics of the FET, and FIG. 9D shows an output waveform at the output terminal (Out) in FIG. 8. The number 41 denotes a leakage pulse that occurred owing to leakage in the pulse wave radar device, the number 42 is a receiving pulse from a target in a close range, and numbers 45 and 46 indicate a switching noise that occurs due to a cutoff operation of the cutoff circuit.

The leakage pulse 41 and the receiving pulse 42 shown in FIG. 9A are input to the input terminal (In) of the cutoff circuit 36. The control terminal (Cont) is supplied with a control signal shown in FIG. 9B, in order to cut off the leakage pulse 41. The control signal of FIG. 9B passes through an integration circuit, to gradually change through a time-wise gradient. Therefore, the FET of the cutoff circuit 36 gradually shifts from a conductive state to a cutoff state or vice versa through the time-wise gradient in accordance with such transfer characteristics as shown in FIG. 9C. The control signal having steep leading and trailing edges becomes moderate in change owing to integration effects of the integration circuit, so that the switching noises 45 and 46 output together with the receiving pulse 42 to the output terminal (Out) of the cutoff circuit 36 are reduced in magnitude.

By such an operation, it is possible to suppress occurrence of noises owing to cutoff operations in a condition where the leakage pulse 41 is cut off, thereby preventing error detection due to leakage so that a distance to a target in a close range may be detected accurately.

Since the conductive state is shifted to the cutoff state or vice versa gradually through a time-wise gradient, a timing error, if any, does not easily cause malfunction. That is, even if the control signal occurs too early, a leakage pulse remains only a little, and even if the control signal occurs too late, a normal of receiving pulse is not completely cut off. In particular, a receiving pulse from a close range immediately after recovery is made from the cutoff state has a large level, so that even if the control signal occurs too late, this receiving pulse can maintain a magnitude large enough to be detected by the signal processing circuit.

Although the control terminal (Cont) in the cutoff circuit 36 shown in FIG. 8 has been provided with C53 and R53 to form a primary low-pass filter, it may be a secondary or higher-order low-pass filter. Further, although the low-pass filter has been adapted to operate linearly through a transition from the conductive state to the cutoff state and vice versa, it may be of a nonlinear type that shifts from the conductive state to the cutoff state and vice versa at different time-wise gradients.

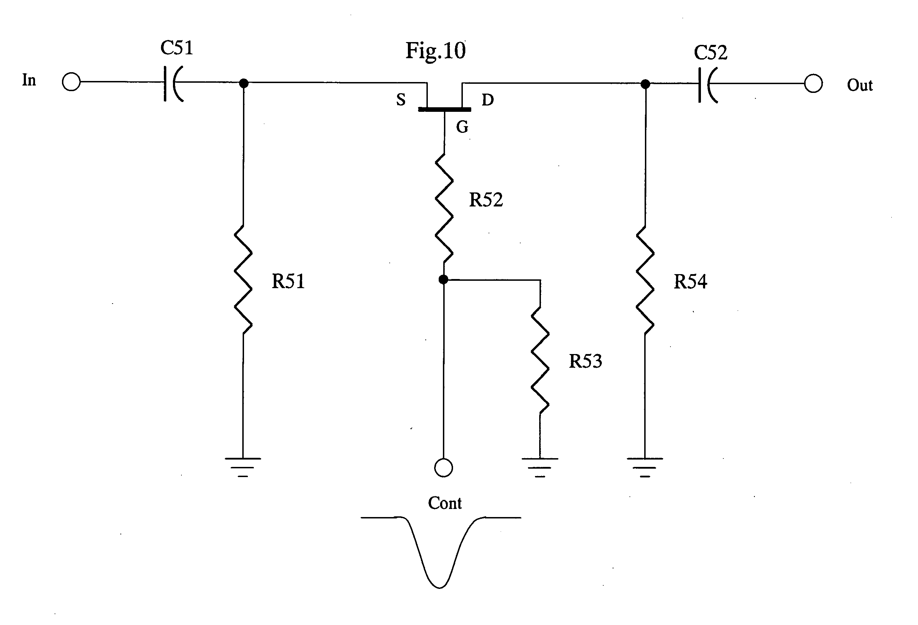

Further, if the control signal having a small pulse width is input to the control terminal (Cont), a noise is liable to occur at the output terminal (Out) of the cutoff circuit owing to leakage from the control terminal (Cont) to the output terminal (Out). To solve this problem, preferably the control terminal (Cont) is supplied with such a control signal as to gradually change through a time-wise gradient as shown in FIG. 10. FIG. 10 shows an example of a waveform input to the control terminal (Cont) of the cutoff circuit in the pulse wave radar device according to the present invention. Although the cutoff circuit shown in FIG. 10 is the same as that shown in FIG. 6, the control terminal (Cont) of the cutoff circuit shown in FIG. 8 may be supplied with such a control signal as to gradually change through a time-wise gradient.

Since control is conducted in such a manner that the conductive state may be shifted to the cutoff state or vice versa gradually through a time-wise gradient, a timing error, if any, does not easily cause malfunction. That is, even if the control signal occurs too early, a leakage pulse remains only a little, and even if the control signal occurs too late, a normal of receiving pulse is not completely cut off. In particular, a pulse received from a close range immediately after recovery is made from the cutoff state has a large level, so that even if the control signal occurs too late, this receiving pulse can maintain a magnitude large enough to be detected by the signal processing circuit.

Further, directly near the output side to the cutoff circuit 36 in the pulse generation circuit 11 shown in FIG. 3 Or 4, a circuit may be provided which shapes a signal into the one that gradually changes through a time-wise gradient such as that of an input signal to the control terminal (Cont) of the cutoff circuit of FIG. 10. By providing such a circuit, a high-frequency component can be removed to thereby reduce leakage that occurs along an output path from the pulse generation circuit 11 to the cutoff circuit 36.

By such an operation, it is possible to suppress occurrence of noises owing to cutoff operations in a condition where the leakage pulse 41 is cut off, thereby preventing error detection due to leakage so that a distance to a target in a close range may be detected accurately.

In the signal processing circuit shown in FIG. 3 or 4, a round-trip propagation time calculation circuit may be provided which calculates a round-trip propagation time to the target based on a difference in time between a timing when a transmitting pulse wave is transmitted from the transmitting antenna 23 and a timing when a receiving pulse wave is received by the receiving antenna 31.

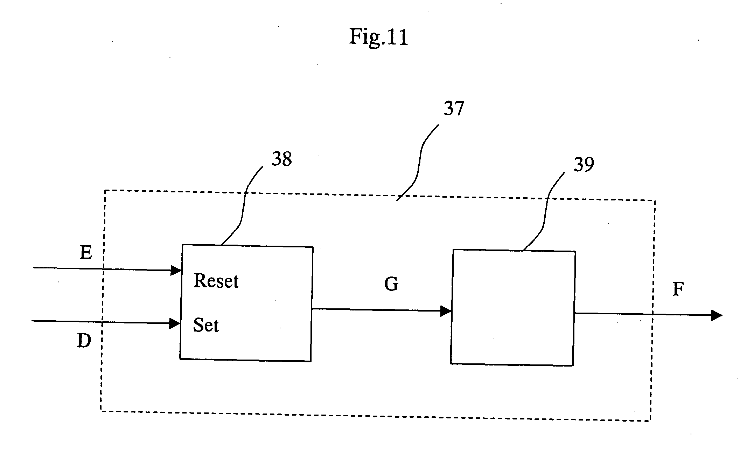

In a certain configuration of the round-trip propagation time calculation circuit, an S-R type flip-flop circuit which is set at a timing when the pulse generation circuit 11 outputs a transmitting pulse and reset at a timing when the baseband amplification circuit 34 outputs a receiving pulse is combined with a low-pass filter that extracts a low-frequency component of an output of this S-R type flip-flop circuit. An example of the configuration of the round-trip propagation time calculation circuit is shown in FIG. 11. In FIG. 11, a number 37 is the round-trip propagation time calculation circuit, a number 38 is the S-R type flip-flop circuit, and a number 39 is the low-pass filter.

As shown in FIG. 11, in the S-R type flip-flop circuit 38, a timing when a transmitting pulse is output from the pulse generation circuit is as a set input (Set in FIG. 11) and, a timing when a receiving pulse is output by the baseband amplification circuit is as a reset input (Reset in FIG. 11). The S-R type flip-flop circuit 38 provides an output that has a long on-state duration if a lapse of time is long from a timing when the pulse generation circuit outputs a transmitting pulse to a timing when the baseband amplification circuit outputs a receiving pulse and has a short on-state duration if the lapse of time is short from the timing when the pulse generation circuit outputs the transmitting pulse to the timing when the baseband amplification circuit outputs the receiving pulse.

The low-pass filter 39 extracts a low-frequency component of an output of the S-R type flip-flop circuit 38. That is, if a lapse of time is long from a timing when the pulse generation circuit outputs a transmitting pulse to a timing when a detector circuit outputs a receiving pulse, an output of the low-pass filter 39 has a large low-frequency component, and if the lapse of time is short from the timing when the pulse generation circuit outputs the transmitting pulse to the timing when the detector circuit outputs the receiving pulse, the output of the low-pass filter 39 has a small low-frequency component. By detecting the output of this low-pass filter 39, a round-trip propagation time to a target can be calculated. To display a distance to the target, the output of the low-pass filter 39 can be converted into a digital value.

In calculation of the distance to the target, a delay time through the transmitting circuit or the receiving circuit in the pulse wave radar device may be compensated by shifting a bias of an output level of the round-trip propagation time calculation circuit by as much as corresponding to the delay time or when calculating a distance to the target from the output of the round-trip propagation time calculation circuit.

Another round-trip propagation time calculation circuit may be a pulse count circuit in which a timing when a transmitting pulse is output from the pulse generation circuit is as a set input and a timing when a receiving pulse is output from the baseband amplification circuit is as a reset input. By generating a pulse that has a constant duration in a lapse of time from a set input to a reset timing and counting the number of pulses during the lapse of time by the pulse count circuit, a round-trip propagation time to the target can be calculated.

In either of the round-trip propagation time calculation circuits, by dividing a round-trip propagation time output from it by twice the light velocity, a distance to the target can be calculated.

Although the above embodiments have been described with respect to a case where the cutoff circuit 36 is put in a cutoff state at a timing of occurring of the leakage pulse 41, the present invention is not limited to this; for example, the cutoff circuit 36 may be held in the cutoff state until a timing which corresponds to a minimum detectable distance of the pulse wave radar device so that this cutoff circuit 36 would be put in the conductive state to pass a receiving pulse after that timing. Specifically, supposing the receiving pulse 42 shown in FIG. 5 to be a reflected wave from a target present at the minimum detectable distance, if this of receiving pulse 42 and the receiving pulse incoming after this of receiving pulse 42 can be received, the pulse wave radar device can detect the target, so that the cutoff circuit 36 is held in the cutoff state until a timing for starting reception of this of receiving pulse 42, that is, the timing that corresponds to the minimum detectable distance, and then shifted to the conductive state. By thus controlling the cutoff circuit 36, error detection due to the leakage pulse can be prevented. It is to be noted that in this case also, a transition period may be arranged when shifting the cutoff circuit 36 from the cutoff state to the conductive state.

Although the above embodiments have been described with respect to a case where the cutoff circuit 36 is put in the cutoff state at a timing when the leakage pulse 41 is generated and then shifted to the conductive state to pass the receiving pulse 42, the present invention is not limited to it; for example, when a lapse of time that corresponds to the maximum detectable distance of the pulse wave radar device elapses after the cutoff circuit 36 comes back to the conductive state, the cutoff circuit 36 may be shifted further to the cutoff state. By thus controlling the cutoff circuit, it is possible to prevent error detection from occurring due to an interference wave or noise from any other device that is received at a timing outside a detectable range. It is to be noted that in this case also, a transition period may be arranged when shifting the cutoff circuit 36 from the cutoff state to the conductive state.

As described above, even if a transmitting pulse wave leaks from a transmitting antenna or modulated circuit, or a transmitting pulse leaks from a pulse generation circuit, a pulse wave radar device comprising a cutoff circuit of the present invention can reduce effects not only of leakage of the transmitting pulse wave but also of leakage of the transmitting pulse that occurs in the pulse wave radar device, thereby preventing error detection due to the leakage so that a distance to a target in a close range can also be detected accurately.

A pulse wave radar device of the present invention can be applied as a vehicle-installed device for the purpose of collision prevention or automatic cruising and also as a fixed pulse wave radar device.

## Claims

1. A pulse wave radar device comprising:
a transmitting circuit for periodically sending a transmitting pulse wave obtained by modulating a transmitting pulse;
a transmitting antenna for transmitting the transmitting pulse wave from the transmitting circuit;
a receiving antenna for receiving a receiving pulse wave reflected from a target;
a demodulation circuit for demodulating a receiving pulse wave from the receiving antenna; and
a cutoff circuit for temporarily shifting an output of the demodulation circuit from a conductive state to a cutoff state,
wherein the cutoff circuit cuts off the output of the demodulation circuit during a time when the transmitting pulse or the transmitting pulse wave is leaking in the pulse wave radar device.

2. A pulse wave radar device comprising:
a transmitting circuit for periodically sending a transmitting pulse wave obtained by modulating a transmitting pulse;
a transmitting antenna for transmitting the transmitting pulse wave from the transmitting circuit;
a receiving antenna for receiving a receiving pulse wave reflected from a target;
a demodulation circuit for demodulating a receiving pulse wave from the receiving antenna; and
a cutoff circuit for temporarily shifting of an output of the demodulation circuit from a conductive state to a cutoff state,
wherein the cutoff circuit cuts off the output of the demodulation circuit until a timing which corresponds to a minimum detectable distance.

3. The pulse wave radar device according to claim 2, wherein the cutoff circuit cuts off the output of the demodulation circuit from a timing that corresponds to a maximum detectable distance.

4. The pulse wave radar device according to any one of claims 1 to 3, wherein the cutoff circuit shifts from the conductive state to the cutoff state and/or vice versa through a time-wise gradient.

5. The pulse wave radar device according to any one of claims 1 to 4, wherein the cutoff circuit is controlled to shift from the conductive state to the cutoff state and/or vice versa by using a pulse wave-shape that changes through a time-wise gradient of a leading edge and/or a trailing edge.

6. The pulse wave radar device according to any one of claims 1 to 5, further comprising a round-trip propagation time calculation circuit for calculating a round-trip propagation time to the target based on a difference in time between a timing when the transmitting pulse is transmitted from the transmitting antenna and a timing when the receiving pulse wave is received by the receiving antenna.
